# EUROPEAN PATENT SPECIFICATION

(11) **EP 1 791 298 B1**
(45) Date of publication and mention of the grant of the patent: **25.05.2011**
(21) Application number: 06775276.6
(22) Date of filing: 03.08.2006
(51) Int. Cl.: H04L 12/26

(54) **A SYSTEM AND METHOD FOR PROCESSING THE LINK FAULT OF THE BROAD BAND ACCESS DEVICE**
SYSTEM UND VERFAHREN ZUM VERARBEITEN DES VERBINDUNGSFEHLERS DER BREITBANDZUGANGSVORRICHTUNG
SYSTEME ET PROCEDE DE TRAITEMENT DE DEFAUT DE LIAISON DU DISPOSITIF D'ACCES LARGE BANDE

(30) Priority: 19.09.2005 CN 200510103486
(43) Date of publication of application: 30.05.2007
(73) Proprietor: Huawei Technologies Co., Ltd., Longgang District, Shenzhen Guangdong 518129 (CN)
(72) Inventor: WU, Haining, Guangdong 518129 (CN)
(74) Representative: Charles, Glyndwr
(86) International application number: PCT/CN2006/001952
(87) International publication number: WO 2007/033567

(56) References cited:
- CN-A- 1 556 637
- CN-A- 1 665 174
- US-A1- 2002 073 355
- US-A1- 2003 214 939
- US-A1- 2005 050 171
- US-A1- 2005 135 342

## Description

### FIELD OF THE INVENTION

The present invention relates to the field of communication technology and in particular to a system and method for handling link failure of broadband access devices.

### BACKGROUND OF THE INVENTION

With the development and application of broadband access technology, VoIP (Voice over Internet Protocol) is applied more and more widely, among which VoBB (Voice over Broadband) is receiving much more attention. VoIP is a technology which carries voice services over IP technology, in other words, it transmits the former analog voice signals instantly over an IP data network in the form of "data packets".

Said VoBB particularly refers to the application of developing VoIP on a broadband access network. In a communication network, the originating point of VoIP is commonly the CPE (Customer Premise Equipment)/IAD (Integrated Access Device).

With the increase of VoBB applications, many telecom operators hope to use this kind of application to replace legacy PSTN (Public Switched Telephone Network) telephone networks in providing voice service to customers.

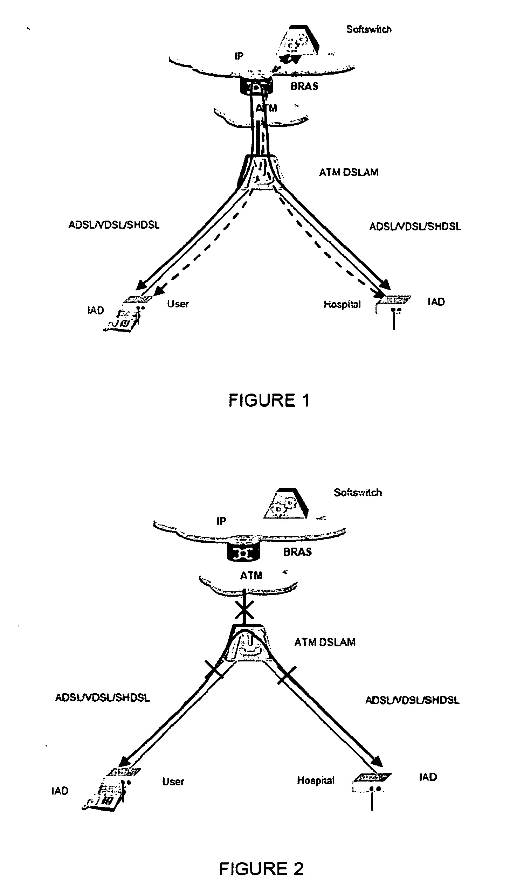

Referring to Figure 1 that shows an illustration of a VoBB application for an implementation example, an IAD accesses an ATM DSLAM (a DSLAM that only supports ATM, ATM is Asynchronous Transfer Mode; DSLAM is Digital Subscriber Line Access Multiplexer) via ADSL/VDSL/SHDSL, the ATM DSLAM then connects to a BRAS (Broadband Remote Access Server) via an ATM network, and connects to an IP network through BRAS. Two IADs then set up a call connection via Softswitch while data traffic is forwarded via BRAS.

This existing technology has disadvantages including: client emergency phone calls, such as emergency rescue call and police call connections are set up via Softswitch and the data is forwarded via BRAS on an IP network. As illustrated in Figure 2, when the connection between ATM DSLAM and the network layer above is interrupted, e.g. the uplink optical fiber of ATM DSLAM is severed, none of the clients connected to this DSLAM are able to communicate with each other, because the ATM DSLAM cannot support inter-client communication. Even if the IAD is manually configured with peer IP addresses, it is still not possible to implement said inter-client communication.

Referring to Figure 2 that shows an illustration of another VoBB application for an implementation example, the IAD connects to an IP DSLAM via ADSL/VDSL/SHDSL. The IP DSLAM then connects to BRAS via an Ethernet aggregation network, and then connects to an IP network via BRAS. Two IADs then set up a call connection via Softswitch and data traffic is forwarded via BRAS.

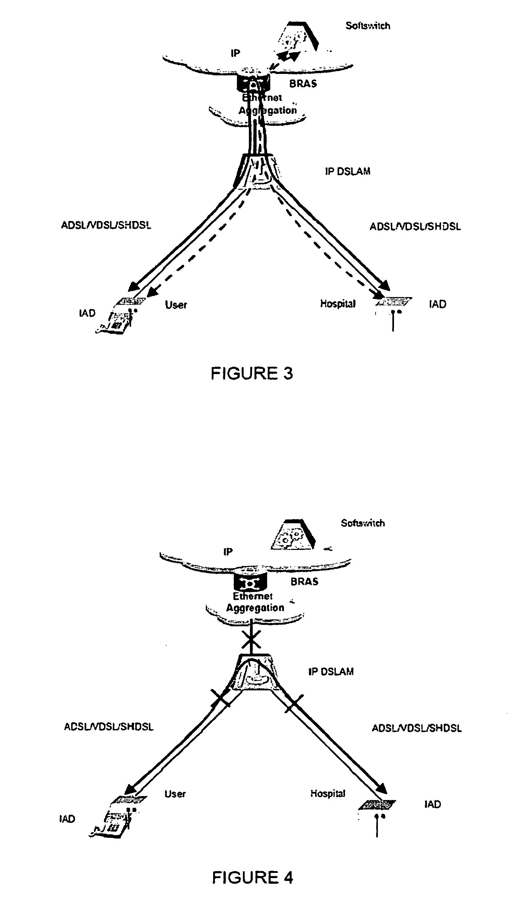

This existing technology has disadvantages including: client emergency phone calls, such as emergency rescue call and police call connections are set up via Softswitch and the data is forwarded via BRAS on an IP network. However, when the connection between ATM DSLAM and the network layer above is interrupted, e.g. the uplink optical fiber of ATM DSLAM is severed, see Figure 4, none of the clients connected to this DSLAM are able to communicate with each other, because the ATM DSLAM cannot normally support inter-client communication. Regardless how the IAD is configured, such as directly configured with peer IP addresses, this is still a difficult problem to solve.

Generally, a single DSLAM provides services for clients in a certain area. When the uplink fails, particularly in the case when a DSLAM covers an entire village or town, local emergency communication must still be provided, yet the current scheme is unable to solve this problem. This disadvantage also exists in PON-OLT (Passive Optical Network - Optical Line Terminal), Ethernet access switches and certain other broadband access devices.

From the above, we see that the current application of VoBB still has many deficiencies when compared with legacy PSTN, when applied to providing emergency communications, such as emergency rescue calls, police calls, etc., which severely limit the field of application for VoBB.
US 2003/0214939 A1 discloses lifeline services which are ensured to local access gateway telephony users by connection of local telephone string to central office and bypassing failed gateway or digital channel.
US 2005/0135342 A1 discloses a call waiting service method and apparatus in a voice over Internet Protocol (VoIP) terminal with a public switched telephone network (PSTN) backup function can guarantee at least two VoIP or PSTN calls to a user.
US 2005/0050171 A1 discloses a redundancy architecture for network processing systems which allows the network to recover from failure of a network processing system without interruption in service.

### BRIEF SUMMARY OF THE INVENTION

The purpose of the present invention is to provide a broadband access device link failure handling system. It installs a status monitoring module and a failure handling module, which are used to monitor the uplink working status for a broadband access device and provide emergency communication channels for clients connected to said device in case said uplink fails.

An additional purpose of the present invention is to provide a broadband access devices link failure handling method, which provides emergency communication channels for clients connected to said device in case the link between the broadband access device and the network layer above is interrupted.

The purposes of the present invention are achieved through the following technical scheme:

The present invention provides a broadband access device link failure handling system, comprising:

Status Monitoring Module, used to monitor whether a failure occurs to a broadband access device uplink to an upper layer network;

Failure Handling Module, used to receive failure messages from said status monitoring module and provide emergency communication channels to the upper layer network for clients connected to said broadband access device.

Said broadband access device comprises: ATM DSLAM only supporting asynchronous transmission mode, IP DSLAM only supporting Internet protocol or Ethernet, PON-OLT or Ethernet access switch.

For said ATM DSLAM or PON-OLT with ATM uplink, their status monitoring module monitors link status using ATM interface F1-F5 OAM functions.

For said IP DSLAM, Ethernet DSLAM, PON-OLT with Ethernet uplink or Ethernet switch, their status monitoring module monitors link status via Ethernet OAM (Operation, Administration and Maintenance) functions or MPLS (Multi Protocol Label Switching) OAM functions.

Said failure handling module comprises:

IP Layer Functional Control Module, used to enable and disable IP layer functions; enabling IP layer functions is used to provide emergency communication channels;

and/or,

Ethernet Layer-2 Interoperability Functional Control Module, used to enable and disable layer-2 Ethernet interoperability functions; enabling layer-2 Ethernet interoperability functions is used to provide emergency communication channels.

The present invention also provides a broadband access device link failure handling method, comprising:

A. Monitoring a status of an uplink to an upper layer network for a broadband access device;

B. Providing emergency communication channels to the upper layer network for clients connected to said broadband access device, when said broadband access device uplink fails.

Said step A, comprises:

Monitor physical status of said uplink and the logical link status between said broadband access device and devices in the network layer above.

Said step B, comprises:

B1. Enable IP layer functions to provide emergency communication channels for clients connected to said broadband access device when said broadband access device uplink fails;

B2. Enable Ethernet layer-2 interoperability functions to provide emergency communication paths for clients connected to said broadband access device when said broadband access device uplink fails;

Said method also comprises:

C. Disable said emergency channels when the failure is recovered

From the aforementioned embodiment of the present invention, it can be seen that the present invention satisfies the requirement for local emergency communication by providing emergency communication channels for clients connected to a broadband access device and continues to provide inter-client communication in a situation where the connection between said broadband access device and the network layer above fails.

### BRIEF DESCRIPTION OF THE DRAWINGS

Figure 1 is an example schematic diagram of a VoBB application using existing technology;

Figure 2 is a schematic diagram of ATM DSLAM uplink failure using existing technology;

Figure 3 is another example schematic diagram of a VoBB application using existing technology;

Figure 4 is a schematic diagram of IP DSLAM uplink failure using existing technology;

Figure 5 is a schematic diagram of the system modules described in the present invention;

Figure 6 is a flow chart of the method described in the present invention.

### DETAILED DESCRIPTION OF THE INVENTION

Embodiments for Implementing the Present Invention

The core of the present invention is to provide a system and a method for processing link failure of broadband access devices. A broadband access device monitors its uplink status in real time and enables IP layer function or Ethernet layer functions to provide emergency communication channels when the said uplink fails.

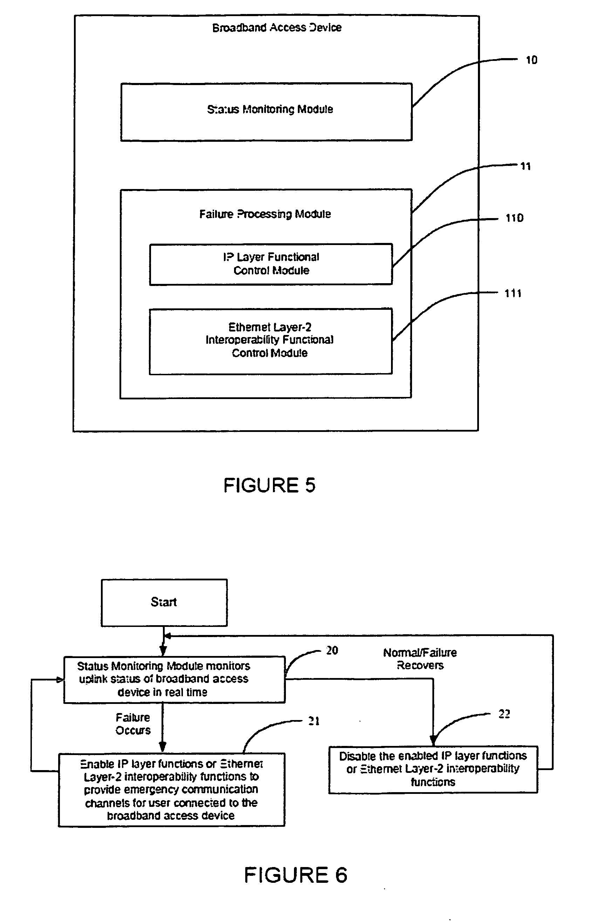

The present invention provides a broadband access device link failure handling system, as illustrated in Figure 5. The present invention installs a status monitoring module (10) and a failure handling module (11) in a broadband access device. Said status monitoring module (10) is used to monitor said broadband access device uplink status in real time, (i.e. monitor the status of the link between said broadband access device and the network layer above, comprising monitoring uplink physical status and status of the logical link with devices in the network layer above) and immediately report a failure message to said failure handling module (11) in the event of detecting a failure during the monitoring process. Said failure comprises: severed optical fiber, severed PVC, interrupted Ethernet connection, etc. Said failure handling module (11) comprises: IP Layer Functional Control Module (110) and Ethernet Layer-2 Interoperability Functional Control Module (111). Of these, the IP layer functional control module (110) is used to enable IP layer functions upon receiving said link failure message and disable said IP layer functions after said failure recovers. Said Ethernet layer-2 Interoperability functional control module (111) is used to enable Ethernet layer-2 interoperability functions on receiving the said link failure message, and disable said Ethernet layer-2 interoperability functions after said failure recovers. Enabling said IP layer functions or Ethernet layer-2 Interoperability functions is to provide emergency communication channels for clients connected to said broadband access device. Specific IP layer functions enabled, comprise: ARP Proxy function (Address Resolution Protocol Proxy server functions), DHCP functions (DHCP server or DHCP Proxy: DHCP being Dynamic Host Configuration Protocol), IP layer-3 forwarding functions, routing protocol functions (static routing or dynamic routing, such as RIP, OSPF), etc. Specific Ethernet layer-2 interoperability functions enabled comprise: entering accessed clients into an Ethernet broadcast domain, and other functions.

Referring to Figure 6 that shows a process diagram for a method of processing link failure for the present invention, this method specifically comprises the following operations:

Step 20: The status monitoring module (10) monitors broadband access device uplink status in real time;

When the broadband access device is working, the status monitoring module (10) monitors the uplink status of said broadband access, comprising physical status of the uplink, and status of the logical link between said broadband access device and devices in the network layer above. The broadband access device comprises ATM DSLAM, Ethernet DSLAM, IP DSLAM, PON-OLT, Ethernet access switch, etc. Different monitoring methods may be adopted for different broadband access devices, v, such as:

For ATM DSLAM, ATM uplink's physical status and logical status may be monitored via the ATM's F-F5 OAM (per ITU-T I.610) function.

For Ethernet/IP DSLAM, Ethernet uplink's physical status and logical status may be monitored via Ethernet OAM function (per IEEE802.3ah, IEEE802.1ag, ITU-T Y.1730); MPLS LSP's status may be monitored via MPLS's OAM (per ITU-T Y.1711), which is also applicable to the Ethernet access switch.

For PON-OLT, the method for ATM DSLAM may be used for those with an ATM uplink; the method for IP DSLAM may be used for those with an Ethernet uplink.

Step 21: When uplink failure is detected, enable IP layer functions or Ethernet layer functions to provide emergency communication channels for clients connected to said broadband access device.

When the status monitoring module (10) detects uplink failure, report the failure message to the failure handling module (11), the IP layer functional control module (110) in said failure handling module (11) enables IP layer functions or the Ethernet layer-2 interoperability functional control module (111) enables Ethernet layer-2 Interoperability functions.

Said enabled IP layer functions comprise: ARP proxy functions (Address Resolution Protocol Proxy Server functions), DHCP functions (DHCP server or DHCP Proxy: DHCP being Dynamic Host Configuration Protocol), IP layer-3 forwarding functions, routing protocol functions (static routing or dynamic routing, such as RIP, OSPF) and other functions.

Said enabled Ethernet layer-2 interoperability functions, comprise: entering accessed clients into an Ethernet broadcast domain, etc.

The IP layer functions and Ethernet layer-2 interoperability functions have in themselves exchange/interoperability functions through which, when enabled, clients may transfer data to each other and achieve an inter-client communication connection.

Step 22: when uplink failure recovers, the IP layer functional control module (110) disables the aforementioned enabled IP layer functions or the Ethernet layer-2 interoperability functional control module disables the enabled Ethernet layer-2 interoperability functions.

During the process of enabling IP layer functions or Ethernet layer-2 interoperability functions, the status monitoring module (10) continues monitoring operations; when it detects said uplink failure is recovered, the IP layer functional control module (110) disables said enabled IP layer functions or the Ethernet layer-2 interoperability functional control module (111) disables the Ethernet layer-2 interoperability functions, and then returns to step 20. The status monitoring module (10) continues monitoring the broadband access device uplink status.

In normal situations, namely no failure has occurred, the broadband access device provides only access and aggregation functions, but provides neither IP layer functions nor Ethernet layer-2 interoperability functions in order to reduce network complexity and increase security. Consequently, to ensure network security and reduce network device complexity, after the aforementioned failure is recovered, IP layer functions or Ethernet layer functions are disabled.

To summarize, the present invention provides emergency communication channels and continues to provide communication connection between clients when the connection between a broadband access device and the network layer above is interrupted.

The aforesaid are only preferred embodiments for implementation according to the present invention, but the protection scope for the present invention should not be considered as thereby limited. It should be noted that any modification and replacement that are easily thought up by technical personnel familiar with the technical area within the technical scope disclosed by the present invention shall be encompassed in the protection scope for the present invention. Consequently, the scope of protection for this invention should be set by the protection scope of the claims.

## Claims

1. A system for processing a link failure of a broadband access device, comprising:
a status monitoring module (10), used to monitor whether a failure occurs to an uplink of a broadband access device;
a failure processing module (11), used to receive a failure message from said status monitoring module and provide an emergency communication channel for a user connected to said broadband access device, **characterized in that** said providing is achieved by enabling IP-layer functions or Ethernet layer-2 interoperability functions in the broadband access device.

2. The system for processing a link failure of a broadband access device in accordance with claim 1, wherein said broadband access device comprises: an ATM DSLAM only supporting an asynchronous transmission mode, an IP DSLAM supporting an Internet protocol or an Ethernet, a PON-OLT or an Ethernet access switch.

3. The system for processing a link failure of a broadband access device in accordance with claim 2, wherein for said ATM DSLAM or PON-OLT using an ATM uplink, the status monitoring module monitors a link status based on ATM interface F1-F5 OAM functions.

4. The system for processing a link failure of a broadband access device in accordance with claim 2, wherein for said IP DSLAM, PON-OLT with an Ethernet uplink, or Ethernet switch, the monitoring module of the broadband access device monitors a link status based on Ethernet operation, administration, and maintenance (OAM) functions or multi protocol label switching (MPLS) OAM functions.

5. The system for processing a link failure of a broadband access device in accordance with claim 1, wherein said failure processing module comprises:
an IP layer functional control module (110), used to enable and disable an IP layer function; enabling the IP layer function to provide the emergency communication channel;
and/or,
an Ethernet layer-2 interoperability functional control module (111), used to enable and disable an Ethernet layer-2 interoperability function, enabling the Ethernet layer-2 interoperability function to provide the emergency communication channel.

6. A method for processing a link failure of a broadband access device, comprising:
A. monitoring a status of an uplink for a broadband access device (20);
B. providing an emergency communication channel for a user connected to said broadband access device, when a failure occurs to the uplink of the broadband access device, **characterized in that** said providing is achieved by enabling on IP-layer function or an Ethernet layer-2 interoperability function in the broadband access device.

7. The method for processing a link failure of a broadband access device in accordance with claim 6, wherein said status of the uplink comprises:
a physical status of an uplink interface and a logical link status between the broadband access device and an upper layer network device.

8. The method for processing a link failure of a broadband access device in accordance with claim 6 or 7, wherein said step B comprises:
B1. enabling an IP layer function to provide the emergency communication channel for the user connected to said broadband access device when the failure occurs to the uplink of the broadband access device (21).

9. The method for processing a link failure of a broadband access device in accordance with claim 6 or 7, wherein said step B comprises:
B2. enabling an Ethernet layer-2 interoperability function to provide the emergency communication channel for the user connected to said broadband access device when the failure occurs to the uplink of the broadband access device (21).

10. The method for processing a link failure of a broadband access device in accordance with claim 6, wherein said method also comprises:
C. disabling said emergency communication channel when the failure is recovered (22).

## Patentansprüche

1. System zum Verarbeiten eines Streckenausfalls einer Breitbandzugangseinrichtung, umfassend:
ein Statusüberwachungsmodul (10), mit dem überwacht wird, ob ein Ausfall an einer Aufwärtsstrecke einer Breitbandzugangseinrichtung auftritt;
ein Ausfallverarbeitungsmodul (11), mit dem eine Ausfallnachricht von dem Statusüberwachungsmodul empfangen und ein Notfallkommunikationskanal für einen mit der Breitbandzugangseinrichtung verbundenen Benutzer bereitgestellt wird, **dadurch gekennzeichnet, dass** das Bereitstellen durch Freigeben von IP-Schicht-Funktionen oder Ethernet-Schicht-2-Interoperabilitätsfunktionen in der Breitbandzugangseinrichtung erzielt wird.

2. System zum Verarbeiten eines Streckenausfalls einer Breitbandzugangseinrichtung nach Anspruch 1, wobei die Breitbandzugangseinrichtung Folgendes umfasst: einen ATM DSLAM, der nur einen asynchronen Übertragungsmodus unterstützt, einen IP DSLAM, der ein Internet-Protokoll oder ein Ethernet unterstützt, ein PON-OLT oder einen Ethernet-Zugangsswitch.

3. System zum Verarbeiten eines Streckenausfalls einer Breitbandzugangseinrichtung nach Anspruch 2, wobei dafür, dass der ATM DSLAM oder das PON-OLT eine ATM-Aufwärtsstrecke verwendet, das Statusüberwachungsmodul einen Streckenstatus auf der Basis von OAM-Funktionen der ATM-Schnittstelle F1-F5 überwacht.

4. System zum Verarbeiten eines Streckenausfalls einer Breitbandzugangseinrichtung nach Anspruch 2, wobei für den IP DSLAM, das PON-OLT mit einer Ethernet-Aufwärtsstrecke oder den Ethernet-Switch das Überwachungsmodul der Breitbandzugangseinrichtung einen Streckenstatus auf der Basis von Funktionen von Operation, Administration and Maintenance (OAM) von Ethernet oder von OAM-Funktionen des Multi Protocol Label Switching (MPLS) überwacht.

5. System zum Verarbeiten eines Streckenausfalls einer Breitbandzugangseinrichtung nach Anspruch 1, wobei das Ausfallverarbeitungsmodul Folgendes umfasst:
ein IP-Schicht-Funktionalsteuermodul (110), mit dem eine IP-Schicht-Funktion freigegeben und gesperrt wird; wobei die IP-Schicht-Funktion freigegeben wird, um den Notfall-Kommunikationskanal bereitzustellen; und/oder
ein Ethernet-Schicht-2-Interoperabilitäts-Funktionalsteuermodul (111), mit dem eine Ethernet-Schicht-2-Interoperabilitätsfunktion freigegeben und gesperrt wird, wobei die Ethernet-Schicht-2-Interoperabilitätsfunktion freigegeben wird, um den Notfall-Kommunikationskanal bereitzustellen.

6. Verfahren zum Verarbeiten eines Streckenausfalls in einer Breitbandzugangseinrichtung, mit den folgenden Schritten:
A. Überwachen eines Status einer Aufwärtsstrecke für eine Breitbandzugangseinrichtung (20);
B. Bereitstellen eines Notfall-Kommunikationskanals für einen mit der Breitbandzugangseinrichtung verbundenen Benutzer, wenn ein Ausfall an der Aufwärtsstrecke der Breitbandzugangseinrichtung auftritt, **dadurch gekennzeichnet, dass** das Bereitstellen durch Freigeben einer IP-Schicht-Funktion oder einer Ethernet-Schicht-2-Interoperabilitätsfunktion in der Breitbandzugangseinrichtung erzielt wird.

7. Verfahren zum Verarbeiten eines Streckenausfalls einer Breitbandzugangseinrichtung nach Anspruch 6, wobei der Status der Aufwärtsstrecke Folgendes umfasst:
einen physischen Status einer Aufwärtsstreckenschnittstelle und einen logischen Streckenstatus zwischen der Breitbandzugangseinrichtung und einer Netzwerkeinrichtung der oberen Schicht.

8. Verfahren zum Verarbeiten eines Streckenausfalls einer Breitbandzugangseinrichtung nach Anspruch 6 oder 7, wobei Schritt B Folgendes umfasst:
B1. Freigeben einer IP-Schicht-Funktion, um den Notfall-Kommunikationskanal für den mit der Breitbandzugangseinrichtung verbundenen Benutzer bereitzustellen, wenn der Ausfall an der Aufwärtsstrecke der Breitbandzugangseinrichtung auftritt (21).

9. Verfahren zum Verarbeiten eines Streckenausfalls einer Breitbandzugangseinrichtung nach Anspruch 6 oder 7, wobei Schritt B Folgendes umfasst:
B2. Freigeben einer Ethernet-Schicht-2-Interoperabilitätsfunktion, um den Notfall-Kommunikationskanal für den mit der Breitbandzugangseinrichtung verbundenen Benutzer bereitzustellen, wenn der Ausfall an der Aufwärtsstrecke der Breitbandzugangseinrichtung auftritt (21).

10. Verfahren zum Verarbeiten eines Streckenausfalls einer Breitbandzugangseinrichtung nach Anspruch 6, wobei das Verfahren außerdem Folgendes umfasst:
C. Sperren des Notfall-Kommunikationskanals, wenn der Ausfall behoben ist (22).

## Revendications

1. Système permettant de traiter une défaillance de liaison d'un dispositif d'accès à large bande, comprenant :
un module de surveillance d'état (10) utilisé pour surveiller s'il apparaît une défaillance sur une liaison montante d'un dispositif d'accès à large bande,
un module de traitement de défaillance (11) utilisé pour recevoir un message sur la défaillance provenant dudit module de surveillance d'état et pour fournir un canal de communication d'urgence pour un abonné relié au dit dispositif d'accès à large bande, **caractérisé en ce que** ladite fourniture est obtenue en validant des fonctions de couche au protocole Internet, IP, ou des fonctions d'interopérabilité de couche 2 de réseau Ethernet dans le dispositif d'accès à large bande.

2. Système permettant de traiter une défaillance de liaison d'un dispositif d'accès à large bande selon la revendication 1, dans lequel ledit dispositif d'accès à large bande comprend : un multiplexeur d'accès aux lignes numériques d'abonnés en mode de transfert asynchrone, ATM DSLAM, ne prenant en charge qu'un mode de transmission asynchrone, un multiplexeur DSLAM au protocole IP prenant en charge un protocole Internet ou un protocole Ethernet, un réseau optique passif - terminal de ligne optique, PON - OLT, ou un commutateur d'accès au réseau Ethernet.

3. Système permettant de traiter une défaillance de liaison d'un dispositif d'accès à large bande selon la revendication 2, dans lequel, pour ledit multiplexeur ATM DSLAM ou pour ledit réseau et terminal PON - OLT utilisant une liaison montante en mode ATM, le module de surveillance de l'état surveille l'état de la liaison sur la base de fonctions OAM (opération, administration et maintenance) F1 à F5 d'une interface en mode ATM.

4. Système permettant de traiter une défaillance de liaison d'un dispositif d'accès à large bande selon la revendication 2, dans lequel, pour ledit multiplexeur DSLAM au protocole IP, pour ledit réseau et terminal PON - OLT utilisant une liaison montante de réseau Ethernet, ou pour un commutateur Ethernet, le module de surveillance du dispositif d'accès à large bande surveille l'état d'une liaison sur la base de fonctions d'opération, d'administration et de maintenance (OAM) du réseau Ethernet ou de fonctions OAM d'une commutation d'étiquettes multi protocole (MPLS).

5. Système permettant de traiter une défaillance de liaison d'un dispositif d'accès à large bande selon la revendication 1, dans lequel ledit module de traitement de défaillance comprend :
un module de commande fonctionnelle de couche au protocole IP (110) utilisé pour valider et invalider une fonction de couche au protocole IP, en validant la fonction de couche au protocole IP pour fournir le canal de communication d'urgence, et/ou,
un module de commande fonctionnelle d'interopérabilité de couche 2 de réseau Ethernet (111) utilisé pour valider et invalider une fonction d'interopérabilité de couche 2 de réseau Ethernet, en validant la fonction d'interopérabilité de couche 2 de réseau Ethernet pour fournir le canal de communication d'urgence.

6. Procédé permettant de traiter une défaillance de liaison d'un dispositif à large bande comprenant :
A. la surveillance de l'état d'une liaison montante pour un dispositif d'accès à large bande (20),
B. la fourniture d'un canal de communication d'urgence pour un abonné relié audit dispositif d'accès à large bande lorsqu'apparaît une défaillance sur la liaison montante du dispositif d'accès à large bande, **caractérisé en ce que** ladite fourniture est obtenue en validant une fonction de couche au protocole IP ou une fonction d'interopérabilité de couche 2 de réseau Ethernet dans le dispositif d'accès à large bande.

7. Procédé permettant de traiter une défaillance de liaison d'un dispositif à large bande selon la revendication 6, dans lequel ledit état de la liaison montante comprend :
un état physique d'un interface de liaison montante et un état logique de liaison entre le dispositif d'accès à large bande et un dispositif réseau de couche supérieure.

8. Procédé permettant de traiter une défaillance de liaison d'un dispositif à large bande selon la revendication 6 ou 7, dans lequel ladite étape B comprend :
B1. la validation d'une fonction de couche au protocole IP afin de fournir le canal de communication d'urgence pour l'abonné relié audit dispositif d'accès à large bande lorsqu'apparaît la défaillance sur la liaison montante du dispositif d'accès à large bande (21).

9. Procédé permettant de traiter une défaillance de liaison d'un dispositif à large bande selon la revendication 6 ou 7, dans lequel ladite étape B comprend :
B2. la validation d'une fonction d'interopérabilité de couche 2 de réseau Ethernet afin de fournir le canal de communication d'urgence pour l'abonné relié audit dispositif d'accès à large bande lorsqu'apparaît la défaillance sur la liaison montante du dispositif d'accès à large bande (21).

10. Procédé permettant de traiter une défaillance de liaison d'un dispositif à large bande selon la revendication 6, dans lequel ledit procédé comprend également :
C. l'invalidation dudit canal de communication d'urgence lorsque la défaillance disparaît (22).
